# EUROPÄISCHE PATENTANMELDUNG

(11) **EP 4 852 299 A1**
(43) Veröffentlichungstag der Anmeldung: **09.12.2026**
(21) Anmeldenummer: 25180766.5
(22) Anmeldetag: 04.06.2025
(51) Int. Cl.: H02M 7/483, H02M 1/00, H02M 5/458, F27B 3/08

(54) **OPTIMIERTE ARMENERGIEREGELUNG MIT MEHREREN ENERGIEREGLERN BEI EINEM MULTILEVELUMRICHTER**

(71) Anmelder: Primetals Technologies Germany GmbH, 91058 Erlangen (DE)
(72) Erfinder: Dinkel, Daniel, Erlangen (DE); Weinzierl, Klaus, 90480 Nürnberg (DE)
(74) Vertreter: Metals@Linz

(57) **Zusammenfassung**

Verfahren zur Armenergieregelung eines Multilevelumrichters (4), der wenigstens einen Teilumrichter (26, 27) mit einer Mehrzahl von Umrichterarmen (9) aufweist, die Gleichspannungsanschlüsse des Teilumrichters (26, 27) mit mehreren, insbesondere drei, jeweils einer Phase zugeordneten Wechselspannungsanschlüssen des Teilumrichters (26, 27) verbinden und jeweils mehrere Submodule (10) mit einem Kondensator (13) und ansteuerbaren Schaltern (14) aufweisen, wobei eine orthogonale, insbesondere orthonormale, Transformation derart bereitgestellt wird, dass bei Anwendung auf einen Satz von Armspannungen und/oder einen Satz von Armströmen als Armgrößen folgende Arten von Komponentengrößen erhalten werden:
- eine Gleichstromkomponente, die auf Gleichstromanteile und/oder Gleichspannungsanteile in dem Teilumrichter (26, 27) bezogen ist,
- wenigstens eine Wechselstromkomponente, die auf Wechselstromanteile und/oder Wechselspannungsanteile in dem Teilumrichter (26, 27) bezogen ist,
- eine Common-Mode-Komponente, die auf gemeinsame Ströme und/oder Spannungen in den Armen (10) bezogen ist, und
- wenigstens eine Kreisstromkomponente, die auf nach außen nicht sichtbare Kreisströme und/oder deren Spannungen innerhalb des Teilumrichters (26, 27) bezogen ist, wobei für Energie-Komponentengrößen, die durch Anwendung der Transformation auf eine die Energie in den jeweiligen Armen (10) beschreibende Energie-Armgröße erhalten werden, jeweils wenigstens ein Sollwert und/oder ein zulässiges Sollintervall für jede Energie-Komponentengröße bereitgestellt werden,
wobei das Verfahren folgende, nach einer Zykluszeit (TZ) jeweils wiederholte Schritte für wenigstens einen des wenigstens einen Teilumrichters (26, 27) aufweist:
- Erfassen von aktuellen Zustandsgrößen des Teilumrichters (26, 27) und Ermitteln der aktuellen Werte der Energie-Komponentengrößen aus den Zustandsgrößen,
- unabhängige Regelung der Energie-Komponentengrößen auf den zugeordneten Sollwert und/oder das zugeordnete Sollwertintervall zur Ermittlung von Regelgrößen, wobei für jede Komponentengröße wenigstens ein Energieregler (23) vorgesehen ist und wenigstens eine Regelgröße wenigstens eines Energiereglers (23) einzustellende Kreisströme beschreibt, und
- Ansteuerung des Teilumrichters (26, 27) zur Einstellung der Regelgrößen.

## Beschreibung

### Gebiet der Technik

Die Erfindung betrifft ein computerimplementiertes Verfahren zur Armenergieregelung eines Multilevelumrichters, der wenigstens einen Teilumrichter mit einer Mehrzahl von Umrichterarmen aufweist, die Gleichspannungsanschlüsse des Teilumrichters mit mehreren, insbesondere drei, jeweils einer Phase zugeordneten Wechselspannungsanschlüssen des Teilumrichters verbinden und jeweils mehrere Submodule mit einem Kondensator und ansteuerbaren Schaltern aufweisen, wobei eine orthogonale, insbesondere orthonormale, Transformation derart bereitgestellt wird, dass bei Anwendung auf einen Satz von Armspannungen und/oder einen Satz von Armströmen als Armgrößen folgende Arten von Komponentengrößen erhalten werden:
- eine Gleichstromkomponente, die auf Gleichstromanteile und/oder Gleichspannungsanteile in dem Teilumrichter bezogen ist,
- wenigstens eine Wechselstromkomponente, die auf Wechselstromanteile und/oder Wechselspannungsanteile in dem Teilumrichter bezogen ist,
- eine Common-Mode-Komponente, die auf gemeinsame Ströme und/oder Spannungen in den Armen bezogen ist, und
- wenigstens eine Kreisstromkomponente, die auf nach außen nicht sichtbare Kreisströme und/oder deren Spannungen innerhalb des Teilumrichters bezogen ist. Daneben betrifft die Erfindung eine Steuereinrichtung, ein Computerprogramm, einen elektronisch lesbaren Datenträger und einen Multilevelumrichter.

### Stand der Technik

Modulare Multilevelumrichter (modular multilevel converter, MMC) haben sich im Stand der Technik als favorisierte Topologie für Hochspannungs- und Hochleistungsanwendungen etabliert. Die vorteilhaften Eigenschaften eines MMC, wie die Redundanz und Ausfallsicherheit, der hohe Wirkungsgrad, die industrielle Skalierbarkeit sowie die Fähigkeit zur elektronischen Beherrschung von Fehlern sind beispielsweise für den Einsatz in der Hochspannungs-Gleichstrom-Übertragung, beispielsweise in Stromnetzen, geeignet. Ferner wurden auch Anwendungen für schwer prädizierbare Lasten, beispielsweise Antriebe oder Elektro-Lichtbogenöfen vorgeschlagen.

In einem Elektrostahlwerk wird Schrott mittels eines Lichtbogenofens geschmolzen. Dazu werden in der Regel drei Elektroden in einen mit Schrott gefüllten Behälter getaucht und sodann zwischen dem Schrott und den Elektroden Lichtbögen generiert, so dass der Schrott aufgeheizt und geschmolzen wird. Die an die Elektroden angelegten Spannungen liegen typischerweise im Bereich von mehreren 100 V bis etwas über 1 kV, manchmal bis zu 2 kV. Die Leistung eines industriellen Lichtbogenofens liegt oftmals zwischen 50 MW und 300 MW.

Durch den ständig flackernden Lichtbogen kommt es zu Spannungsschwankungen und - wenn keine Gegenmaßnahmen ergriffen werden - zu erheblichen Netzrückwirkungen. Historisch ist es bekannt, dem Lichtbogenofen Kompensatoren parallel zu schalten, beispielsweise einen sogenannten SVC (static VAR compensator) oder einen sogenannten STATCOM (static compensator) oder passive Filter. Derartige Kompensatoren sind groß, schwer und teuer. Weiterhin erzeugen sie Verlustleistung und beeinflussen auch andere an das Versorgungsnetz angeschlossene Einheiten.

Aus EP 2 329 684 B1 ist bekannt, den Lichtbogenofen über einen Multilevelumrichter (auch: Multilevelkoverter) zu speisen, der eingangsseitig des Ofentransformators angeordnet ist. Mit einem derartigen Umrichter ist es möglich, zusätzlich zu einer genauen Einstellung der Blindleistung auf der Eingangsseite auch die vom Elektrolichtbogenofen aufgenommene Wirkleistung zu regeln. In der genannten EP-Schrift ist ausgeführt, dass über die symmetrische Belastung der Phasen des Versorgungsnetzes mit Wirkleistung hinausgehende Rückwirkungen der Phasen des Lichtbogenofens auf das Versorgungsnetz minimiert werden. Die genaue Art und Weise der Ansteuerung des Multilevelumrichters ist der genannten EP-Schrift nicht zu entnehmen. In der nachveröffentlichen europäischen Patentanmeldung EP 23218588.4 wurde eine Konkretisierung der Vorgehensweise in EP 2 329 684 B1 vorgeschlagen, bei der die ausgangsseitige Phasenspannung im komplexen Raum in Anteile parallel und senkrecht zum Strom-Raumzeiger aufgeteilt werden.

Allgemein gesprochen umfasst ein Multilevelumrichter für drei Phasen wenigstens einen Teilumrichter mit einer Mehrzahl von Umrichterarmen (Umrichterzweigen), die Gleichspannungsanschlüsse des Teilumrichters mit drei jeweils einer Phase zugeordneten Wechselspannungsanschlüssen des Teilumrichters verbinden und jeweils mehrere Submodule mit einem Kondensator und ansteuerbaren Schaltern aufweisen. Die Submodule können beispielsweise Halbbrücken oder Vollbrücken umfassen. Eine Halbbrücke kann dabei einen ersten Schalter schließen und einen zweiten Schalter öffnen, um die Spannung zwischen den beiden nach außen gehenden Kontakten des Submoduls auf Null zu setzen. In der umgekehrten Schaltstellung liegt zwischen den beiden Kontakten die positive Kondensatorspannung an. Bei der Vollbrücke kann je nach Schalterstellung an den nach außen gehenden Kontakten des Submoduls entweder die positive Kondensatorspannung, die negative Kondensatorspannung oder Null auftreten.

Beim Lichtbogenofen können beispielsweise zwei Teilumrichter verwendet werden, deren Gleichspannungsanschlüsse zu einem Spannungszwischenkreis verbunden sind, wobei die Wechselspannungsanschlüsse mit dem Netz bzw. über den Ofentransformator mit dem Lichtbogenofen zu verbinden sind. In anderen Anwendungen, beispielsweise dem Betrieb von Antriebsmitteln aus einer Gleichspannungsquelle, kann ein Multilevelumrichter auch einen einzigen Teilumrichter umfassen.

Bei der Regelung des Multilevelumrichters ist es die Aufgabe, eine stabile Regelung der Kondensatorladungen bzw. Kondensatorspannungen bzw. Energieinhalte der Kondensatoren aufzubauen. Dabei gibt es bei jedem Umrichterarm (im Folgenden auch kurz "Arm") eine unterlagerte Regelung, die im Falle einer gewünschten Armspannungserhöhung darüber entscheidet, welcher Kondensator zugeschaltet wird und im Falle einer gewünschten Armspannungserniedrigung entscheidet, welcher Kondensator weggeschaltet wird. Dazu werden beispielsweise für jeden Arm die Kondensatorspannungen erfasst, der Größe nach sortiert, die Richtung des Stromes erfasst, und wenn der Strom positiv ist, wird im Falle einer Zuschaltung derjenige Kondensator mit der niedrigsten Spannung, Ladung bzw. Energie zugeschaltet, damit er geladen wird. Im Falle einer Abschaltung wird derjenige Kondensator mit der höchsten Spannung, Ladung bzw. Energie weggeschaltet, damit er nicht weiter geladen wird. Bei negativem Strom ist es umgekehrt. Analog wird auch bei einer Vollbrücke verfahren. Gewünschte Armspannungen sind letztlich das Ergebnis der oben bereits beispielhaft beschriebenen Leistungsregelung, die auf den Bedarf der Last und die Vermeidung von Flicker abzielt.

Allerdings muss zusätzlich garantiert werden, dass die Summe aller Kondensatorenergien eines Armes nicht einen unzulässigen Wert annimmt. Für die Energie eines Armes (Armenergie) gibt es einen oberen Schwellwert, der sicherstellt, dass keiner der Kondensatoren auf einer unzulässig hohen Spannung arbeitet, der zur Schädigung bzw. Zerstörung des Kondensators führen kann, und einen unteren Schwellwert, bei dessen Unterschreitung selbst die Einschaltung aller Kondensatoren eine zu kleine Armspannung erzeugt, die nicht mehr ausreichend ist für die übergeordnete Regelung. Ist der Multilevelumrichter beispielsweise an einem Netz angeschlossen, muss wenigstens die Netzspannung gestellt werden können. Andernfalls würden sich unzulässig hohe Ladeströme ergeben, die nicht mehr heruntergeregelt werden können.

Die komplizierte Aufgabe, die Armenergien zwischen diesen beiden Schwellwerten, beispielsweise auf bzw. um einen Sollwert mittig zwischen den Schwellwerten, zu halten, wird auch als Armenergieregelung bezeichnet. Ist die Armenergieregelung unzureichend, können erhebliche Einschränkungen im Betrieb resultieren. Dagegen kann es eine geschickte Armregelung sogar erlauben, Gleichstromanteile bzw. Gleichspannungsanteile an den Wechselspannungsanschlüssen bereitzustellen.

Grundsätzlich kann man die dynamischen Ströme und Spannungen in einem Teilumrichter in mehrere interpretierbare Komponentengrößen aufteilen. Hierbei existieren neben einer Common-Mode-Komponente (CM-Komponente) auf den Wechselstrom und den Gleichstrom bezogene Komponenten (AC- bzw. DC-Komponente) sowie Kreisstromkomponenten, die Kreisströme in dem Teilumrichter beschreiben, die nach außen hin nicht in Erscheinung treten. Diese Kreisströme werden häufig verwendet, um Freiheitsgrade zur Armenergieregelung bereitzustellen.

Im Stand der Technik bekannte Armenergieregelungsverfahren zielen darauf ab, prädiktiv den zukünftigen Verlauf insbesondere der Wechselstrom- und Wechselspannungsanteile sowie der netzseitigen Größen in dem Teilumrichter vorherzusagen, beispielsweise als periodischer Verlauf. Bei einem solchen periodischen Verlauf kann ausgerechnet werden, welche ebenfalls harmonischen Kreisströme erforderlich sind, damit die Armenergien nach einer Periode wieder denselben Wert aufweisen.

In der Dissertation von Daniel Dinkel, "Direkte Multivariablenregelung von Modularen Multilevel Umrichtern", Neubiberg: Universitätsbibliothek der Universität der Bundeswehr München, 2022, wird ein Ansatz beschrieben, in dem die Armenergieregelung auf einer zu optimierenden Zielfunktion basiert, die zukünftige Kreisströme liefert. Dabei kann zum einen eine modellprädiktive Methode verwendet werden, zum anderen aber auch mit Momentanleistungswerten gearbeitet werden, um Kreisströme in einem einzigen Energieregler zu ermitteln. Zur Umsetzung der ermittelten Kreisströme und sonstigen Ergebnisse der Leistungs- und Energieregelung wird eine sogenannte Multivariablensteuerung (MVC) vorgeschlagen. Konkret anzusteuernde Schalter zur möglichst genauen Herstellung ermittelter Komponentengrößen können beispielsweise über Look-Up-Tabellen bereitgestellt werden.

Die Dissertation zeigt auch anhand weiterer Referenzen, dass es eine Vielzahl möglicher Verfahren gibt, die üblicherweise voraussetzen, dass eine gewisse Prädizierbarkeit des Lastverhaltens in einer nächsten Periode bzw. einem zukünftigen Zeitabschnitt gibt. Bei der Steuerung von Lasten mit plötzlich wechselnden Anforderungen trifft diese Annahme jedoch nicht zu. Beispielsweise ist es bei einem Elektro-Lichtbogenofen, der über einen Ofentransformator angesteuert wird, schwierig, eine Vorhersage auch nur im Millisekundenbereich zu treffen, da es beispielsweise zu einem Lichtbogenabriss oder einem Kurzschluss, wenn ein abgeschmolzenes Stück Metall gegen eine Elektrode fällt, kommen kann.

Ein weiterer Nachteil des in der Dissertation beschriebenen Vorgehens ist, dass bei der Bereitstellung von Gleichspannungsanteilen an den Wechselspannungsanschlüssen der Umrichter außerordentlich empfindlich selbst auf einen sehr geringen Gleichanteil in den AC-Spannungen und -strömen reagiert. Dies gilt selbst dann, wenn die Leistung zeitlich konstant ist. Für einige Anwendungsfälle kann Derartiges jedoch auftreten. Beispielsweise kann ein Lichtbogenofen selbst in geregeltem Betrieb sehr niederfrequente Anteile in den Spannungen und Strömen aufweisen, da der Strom im Lichtbogen richtungsabhängig von unterschiedlichen Ionen getragen werden kann, richtungsabhängig unterschiedlich flackern kann, eine übergeordnete Elektrodenregelung Abweichungen der Lichtbogenimpedanzen nicht notwendigerweise mittelwertfrei nachführt und auch im Ofentransformator Magnetisierungsströme nicht notwendigerweise mittelwertfrei sind.

Der Erfindung liegt daher die Aufgabe zu Grunde, eine demgegenüber verbesserte, robuste und verlässliche Möglichkeit zur Armenergieregelung in Multilevelumrichtern anzugeben.

### Zusammenfassung der Erfindung

Zur Lösung dieser Aufgabe sind erfindungsgemäß ein computerimplementiertes Verfahren mit den Merkmalen des Anspruchs 1, eine Steuereinrichtung mit den Merkmalen des Anspruch 9, ein Computerprogramm mit den Merkmalen des Anspruchs 10, ein elektronisch lesbarer Datenträger mit den Merkmalen des Anspruchs 11 und ein Multilevelumrichter mit den Merkmalen des Anspruch 12 vorgesehen. Vorteilhafte Weiterbildungen ergeben sich aus den Unteransprüchen.

Erfindungsgemäß wird ein Armenergieregelungsverfahren für einen Multilevelumrichter vorgeschlagen, wobei der Multilevelumrichter wenigstens einen Teilumrichter mit einer Mehrzahl von Umrichterarmen aufweist, die Gleichspannungsanschlüsse des Teilumrichters mit mehreren, insbesondere drei, jeweils einer Phase zugeordneten Wechselspannungsanschlüssen des Teilumrichters verbinden und jeweils mehrere Submodule mit einem Kondensator und ansteuerbaren Schaltern aufweisen, wobei eine orthogonale, insbesondere orthonormale, Transformation derart bereitgestellt wird, dass bei Anwendung auf einen Satz von Armspannungen und/oder einen Satz von Armströmen als Armgrößen folgende Arten von Komponentengrößen erhalten werden:
- eine Gleichstromkomponente (DC-Komponente), die auf Gleichstromanteile und/oder Gleichspannungsanteile in dem Teilumrichter bezogen ist,
- wenigstens eine Wechselstromkomponente (AC-Komponente), die auf Wechselstromanteile und/oder Wechselspannungsanteile in dem Teilumrichter bezogen ist,
- eine Common-Mode-Komponente (CM-Komponente), die auf gemeinsame Ströme und/oder Spannungen in den Armen bezogen ist, und
- wenigstens eine Kreisstromkomponente (CC-Komponente), die auf nach außen nicht sichtbare Kreisströme und/oder deren Spannungen innerhalb des Teilumrichters bezogen ist,
   wobei vorgesehen ist, dass für Energie-Komponentengrößen, die durch Anwendung der Transformation auf eine die Energie in den jeweiligen Armen (Armenergien) beschreibende Energie-Armgröße erhalten werden, jeweils wenigstens ein Sollwert und/oder ein zulässiges Sollintervall für jede Energie-Komponentengröße bereitgestellt werden,
   wobei das Verfahren folgende, nach einer Zykluszeit jeweils wiederholte Schritte für wenigstens einen des wenigstens einen Teilumrichters aufweist:
      - Erfassen von aktuellen Zustandsgrößen des Teilumrichters und Ermitteln der aktuellen Werte der Energie-Komponentengrößen aus den Zustandsgrößen,
      - Unabhängige Regelung der Energie-Komponentengrößen auf den zugeordneten Sollwert und/oder das zugeordnete Sollwertintervall zur Ermittlung von Regelgrößen, wobei für jede Komponentengröße wenigstens ein Energieregler vorgesehen ist und wenigstens eine Regelgröße wenigstens eines Energiereglers einzustellende Kreisströme beschreibt, und
      - Ansteuerung des Teilumrichters zur Einstellung der Regelgrößen.

Dabei wird im Folgenden von dem gängigen Fall dreier Phasen ausgegangen. In diesem Fall liegen zwei Wechselstromkomponenten und zwei Kreisstromkomponenten vor, wie beispielsweise in der bereits genannten Dissertation von Daniel Dinkel und im Folgenden näher erläutert wird. Für die Komponentenarten AC-Komponente und CC-Komponente gibt es also jeweils zwei konkrete Komponenten, also eine erste AC-Komponente und CC-Komponente sowie eine zweite AC-Komponente und CC-Komponente. Die Erläuterung in Bezug auf drei Phasen schließt nicht die Anwendung des hier beschriebenen Konzepts auf Systeme mit zwei oder mehr als drei Phasen aus.

Es wird vorgeschlagen, eine gemeinsame Transformation zu verwenden, die sowohl auf einen Satz von Armströmen als auch auf einen Satz von Armspannungen angewendet werden kann und die entsprechenden Strom-Komponentengrößen bzw. Spannungs-Komponentengrößen liefert. Werden die Armgrößen beispielsweise als Vektor geschrieben, kann die orthogonale (und mithin lineare) Transformation als eine Matrix geschrieben werden. Diese Matrix bzw. allgemein Transformation kann auch auf Armgrößen angewendet werden, die die aktuell in den jeweiligen Umrichterarmen (kurz: Armen) gespeicherte Armenergie beschreiben, wobei zur Interpretierbarkeit im Folgenden noch näher ausgeführt werden wird. Die Benennung der Komponenten erfolgt dabei der Einfachheit halber und bekannten Konventionen folgend nach den Strömen, obwohl - beispielsweise bei Transformation von Armspannungen - selbstverständlich auch ein Bezug auf Spannungen gegeben ist; bei manchen Armgrößen ggf. sogar auf beides. Dabei wird für konkrete Komponentengrößen nun die Ausgangs-Armgröße in Verbindung mit der Art der Komponente als Bezeichnung gewählt, also beispielsweise "Energie-Gleichstromkomponente" (Kurz Energie-DC-Komponente) oder "zweite Spannungs-Wechselstromkomponente" (kurz Spannungs-AC-Komponente).

Hierbei sind die durch Anwendung der Transformation auf die Armströme erhaltenen Strom-Komponentengrößen hinsichtlich ihrer Wirkung auf die einzelnen Arme aufgrund der Transformation, die sich beispielsweise bei vektorieller Schreibweise der Armströme als orthogonale, insbesondere orthonormale, Transformationsmatrix schreiben lässt, klar interpretierbar, insbesondere, was die Kreisströme angeht.

Der Bezug der Komponentengrößen kann hierbei auch so formuliert werden, dass
- bei der Common-Mode-Komponente sich die Größen aller sogenannten oberen Arme (positive Arme; p-Arme) und aller unteren Arme (negative Arme, n-Arme) jeweils gleichen, wobei die Größen der unteren Arme das negative der positiven Arme sind;
- die Wechselstromkomponente relevant für die Darstellung der Wechselspannungen und Wechselströme auf der Wechselspannungsseite (also an den Wechselspannungsanschlüssen) ist,
- die Gleichstrom-Komponente relevant für die Ströme und Spannungen auf der Gleichspannungsseite (also an den Gleichspannungsanschlüssen) ist, und
- die wenigstens eine Kreisstrom-Komponente für Kreisströme bzw. deren Spannungen relevant ist.

Die Idee ist es nun, auf eine die Armenergie, die aufgrund der Ladungen der Kondensatoren in den einzelnen Armen gespeichert ist und die auf einen Sollwert innerhalb enger Toleranzgrenzen geregelt werden soll, beschreibende Energiegröße als weitere Armgröße die Transformation anzuwenden, so dass entsprechende Energie-Komponentengrößen erhalten werden. Werden für diese Energie-Komponentengrößen Sollwerte vorgegeben, lässt sich aufgrund der bekannten Transformation wiederum für jede Energie-Komponentengröße interpretieren, wo Abweichungen zu hohe und wo zu niedrige Armenergie anzeigen. Aufgrund der Tatsache, dass die Wirkung der entsprechenden Stromkomponenten, hier vornehmlich der Kreisströme, auch bekannt ist, lässt sich formulieren, wie für jede Abweichung korrigierende Strom-Komponentengrößen formuliert werden können.

Dabei ist die Erkenntnis wichtig, dass eine orthonormale, bevorzugte Transformation leistungsinvariant ist und Skalierungsfaktoren vermeidet. Allerdings kann auch erkannt werden, dass im Allgemeinen die Energie-Komponentengrößen, insbesondere bevorzugt für die maximal möglichen Armspannungen, nicht ausschließlich durch die entsprechenden Strom- und Spannungskomponentengrößen bestimmt sind. Daher sind aufgrund der Orthonormalität, bevorzugt Orthogonalität, zwar entkoppelte Energieregler möglich, aber Abweichungen müssen nicht unbedingt durch Ströme und/oder Spannungen derselben Komponente korrigiert werden. Insbesondere bedeutet dies, dass die nach außen nicht sichtbaren Kreisströme - je nachdem, was vorgegeben ist - zur Korrektur der Abweichung in mehreren Gruppen von Komponentengrößen (und nicht nur für die Energie-Kreisstromgrößen) verwendet werden können, was erfindungsgemäß vorteilhaft ausgenutzt wird.

Beispielsweise können basierend auf der Interpretation und/oder anderweitig heuristisch Gleichungen für Strom-Komponentengrößen bzw. deren Änderungen formuliert werden, die multiplikativ die Energie-Komponentengröße bzw. deren Änderung/Abweichung (als Eingangswert eines Reglers), einen Verstärkungsfaktor und eine Gesamtsteuergröße verknüpfen. Die Gesamtsteuergröße kann sich aus armbezogenen, aufsummierten Steuergrößen zusammensetzen, die letztlich eine Art Gewichtung des jeweiligen Arms aufgrund der oben genannten Interpretation derart beschreiben, dass die "Richtung" der Korrektur exakt passend gewählt ist und keine anderen Abweichungen herbeiführt.

Wo und wie durch die Kreisströme korrigiert werden kann und welche Abweichungen von dem Sollwert der Armeenergie-Komponentengrößen anderweitig zu korrigieren sind, kann davon abhängen, was an welchen Anschlüssen des Teilumrichters angeschlossen ist und welche Komponentengrößen des Stroms und der Spannung, insbesondere bezogen auf die Gleichstromkomponente (an den Gleichstromanschlüssen) und die Wechselspannungskomponente(n) (an den Wechselspannungsanschlüssen) und die Common-Mode-Komponente (Sternpunkt angeschlossen oder nicht), von außen bzw. einer anderen Regelungseinheit, insbesondere der Leistungsregelung, festgelegt sind sowie welcher Wertebereich denkbar ist. Dabei ist noch anzumerken, dass bei nicht angeschlossenem Sternpunkt die Strom-Common-Mode-Komponente immer Null ist. Hinsichtlich der Spannungs-Common-Mode-Komponente und deren potentieller Nutzung wird im Folgenden noch genauer ausgeführt.

Konkret kann vorgesehen sein, dass zumindest für die Energieregler der Energie-Gleichstromkomponente und der Energie-Wechselstromkomponente die Regelabweichung über Kreisströme korrigiert wird und/oder für den Energieregler der Energie-Common-Mode-Komponente die wenigstens eine Regelgröße einen Kreisstrom und/oder eine Strom-Komponentengröße gewählt aus der Gruppe der Strom-Gleichstromkomponente und wenigstens einer Strom-Wechselstromkomponente betrifft und/oder für den Energieregler der Gleichstromkomponente die wenigstens eine Regelgröße eine Strom-Komponentengröße gewählt aus der Gruppe der Strom-Gleichstromkomponente und wenigstens einer Strom-Wechselstromkomponente betrifft.

Für den Common-Mode-Regler ist es dabei wichtig zu erkennen, dass eine Common-Mode-Abweichung genau dann nicht über Kreisströme ausgeregelt werden kann, wenn die Spannungs-Wechselstromkomponenten bzw. die Wechselspannungen an den Wechselspannungsanschlüssen gleich Null sind. Dies liegt daran, dass beispielsweise die Summe der positiven Armenergien nicht verändert werden kann, da dann, wenn in dieser Situation ein positiver Arm geladen wird, die anderen beiden positiven Arme entsprechend entladen werden. Dasselbe gilt für die negativen Arme. Gerade dann, wenn die Wechselspannungsanschlüsse mit der Last verbunden sind, kann eine Anforderung für verschwindende Wechselspannungen durchaus auftreten. Bei einer Anordnung von zwei Teilumrichtern (einer netzseitig, einer lastseitig) mit einem Gleichspannungs-Zwischenkreis hat sich nun gezeigt, dass über die mit dem Zwischenkreis-Gleichstrom über einen Faktor zusammenhängende Strom-Gleichstromkomponente zumindest für den lastseitigen Teilumrichter (wo der Fall, dass die Wechselspannungen Null werden sollen, auftreten kann) eine Ausregelung möglich ist. Die Strom-Gleichstromkomponente regelt dann nicht nur die Gesamtenergie, sondern auch die Energie-Common-Mode-Komponente aus. Dies kann insbesondere, wie noch genauer dargelegt werden wird, optional durch geschickte Wahl der Spannungs-Common-Mode-Komponente unterstützt werden. Da aber, auf der anderen Seite, bei hohen angeforderten Wechselspannungen an den Wechselspannungsanschlüssen eine Ausregelung über Kreisströme aufgrund reduzierter Rückwirkung auf den Zwischenkreis zweckmäßiger sein kann, ist es auch denkbar, den Energieregler für die Energie-Common-Mode-Komponente so auszugestalten, dass sowohl Kreisströme als auch ein Gleichstrom ausgegeben werden, oder auch zwischen den Ausgangsgrößen, also Regelgrößen, umzuschalten.

Dies sei am Beispiel einer Anwendung bei einem Elektro-Lichtbogenofen genauer erläutert. Dort umfasst der Multilevelumrichter zwei Teilumrichter, nämlich einen netzseitigen Teilumrichter, der mit einem versorgenden Netz (Versorgungsnetz) verbunden ist, und einen ofenseitigen Teilumrichter, der über einen Ofentransformator mit dem Lichtbogenofen, genauer dessen Elektroden, verbunden ist. Über die verbundenen Gleichspannungsanschlüsse wird ein Gleichspannungs-Zwischenkreis gebildet.

Bei dem ofenseitigen Teilumrichter ist die Regelgröße (Stellgröße), also die Ausgangsgröße, des Common-Mode-Energiereglers und des Gleichstrom-Energiereglers jeweils der Gleichstrom, also die Strom-Gleichstromkomponente, die leicht in den Zwischenkreisstrom umgerechnet werden kann. Die Ausgangsgrößen der übrigen Energieregler sind jeweils die beiden Kreisströme, also die erste und die zweite Strom-Kreisstromkomponente. Die Spannungs-Gleichstromkomponente (und hierdurch letztlich die Zwischenkreis-Gleichspannung) ist dabei vorgegeben. Auch die Spannungs-Common-Mode-Komponente kann vorgegeben sein, worauf im Folgenden noch näher eingegangen werden wird. Die beiden ofenseitigen Wechselströme (und mithin die Strom-Wechselstromkomponenten) sind Zustandsgrößen und werden gemessen und die ofenseitigen Wechselspannungen (und somit die Spannungs-Wechselstromkomponenten) sind Sollwerte, die von der überlagerten Ofen-Leistungsregelung geliefert werden.

Bei dem netzseitigen Teilumrichter hat der Common-Mode-Regler Anteile der beiden Strom-Kreisstromkomponenten als Ausgangsgrößen. Der Gleichspannungs-Energieregler muss seine Regelabweichung dagegen über die Wechselspannungsseite ausgleichen. Die netzseitige Wechselspannung ist dabei vom Netz vorgegeben, wird gemessen oder ist anderweitig als Zustandsgröße bekannt. Auch ist ein netzseitiger Leistungsfaktor vorgegeben oder bekannt. Damit sind die Wechselströme und somit die Strom-Wechselstromkomponenten insgesamt klar bestimmt. Die übrigen Energieregler sind gleich ausgestaltet wie beim ofenseitigen Teilumrichter; zudem kann auch hier die Common-Mode-Spannung (Spannungs-Common-Mode-Komponente) vorgegeben sein.

Wie erwähnt, kann eine Common-Mode-Regelabweichung grundsätzlich sowohl über den Gleichstrom als auch über die Kreisströme korrigiert werden, sodass auch gemischte Ausgangsgrößen/Regelgrößen denkbar sind, beispielsweise die Regelgrößen des Common-Mode-Energiereglers sowohl einen Anteil der Strom-Gleichstromkomponente als auch der beiden Strom-Kreisstromkomponenten umfassen können.

Allgemein kann man sagen, dass bei dem erfindungsgemäßen Ansatz auf eine Prognose zukünftiger Ströme bzw. sonstiger (Arm-)Größen verzichtet wird. Stattdessen wird eine Energieregelung verwendet, die allein mit Momentanwerten auskommt und dadurch jederzeit auf Unwägbarkeiten reagieren kann. Hierzu werden die sechs Armenergien eines Teilumrichters betrachtet. Diese sollen beispielsweise alle möglichst nahe an einem zugehörigen Sollwert liegen. Dabei sei darauf hingewiesen, dass die Energie-Armgröße nicht zwangsläufig die Armenergie selber sein muss, sondern statt der Armenergie W als Armgröße auch Armladungen oder maximalschaltbare Armspannungen betrachtet werden können. Denn es gilt für jeden Arm: $W = \frac{1}{2} {CV}^{2} = \frac{1}{2} \frac{{Q}^{2}}{C} ,$ wobei C die Gesamtkapazität eines Arms, die sich durch Reihenschaltung aller Speicherkondensatoren eines Arms ergibt, Q die Ladung eines der Kondensatoren (für alle Kondensatoren als gleich angenommen) und V die maximal schaltbare Armspannung, also die Spannung des Arms, wenn alle Kondensatoren eingeschaltet sind, bezeichnet. Vorzugsweise kann die Energie-Armgröße die maximal schaltbare Armspannung sein. Das hat den Vorteil, dass die maximal schaltbaren Armspannungen linear mit den Spannungen und Strömen zusammenhängen, während die Armenergie selber nichtlinear mit diesen zusammenhängt. Somit stellt ein Arbeiten mit den Armenergien als Armgröße einen schwieriger umsetzbaren Fall dar.

Die bevorzugt orthonormale Transformation ist, wie bereits erwähnt, so gewählt, dass sich vier Arten von Komponentengrößen ergeben, nämlich
- die Common-Mode-Komponente (Index im Folgenden cm), bei denen die Größen aller sogenannten oberen Arme (positive Arme; p-Arme) und aller unteren Arme (negative Arme, n-Arme) jeweils gleich sind, wobei die Größen der unteren Arme das negative der positiven Arme sind;
- die wenigstens eine Wechselstromkomponente, bei drei Phasen zwei Wechselstromkomponenten (Index im Folgenden ac1, ac2), relevant für die Darstellung der Wechselspannungen und Wechselströme auf der Wechselspannungsseite (also an den Wechselspannungsanschlüssen),
- die Gleichstrom-Komponente (Index im Folgenden dc), die relevant für die Ströme und Spannungen auf der Gleichspannungsseite (also an den Gleichspannungsanschlüssen) ist, und
- die wenigstens eine Kreisstrom-Komponente, bei drei Phasen zwei Gleichstromkomponenten (Index im Folgenden cc1, cc2), die für Kreisströme bzw. deren Spannungen stehen.

Schreibt man, im folgenden Beispiel für die Spannungen, für die Spannungen der positiven Arme ${U}_{p} = \left[\begin{matrix}{u}_{p 1} \\ {u}_{p 2} \\ {u}_{p 3}\end{matrix}\right]$
und für die Spannungen der negativen Arme ${U}_{n} = \left[\begin{matrix}{u}_{n 1} \\ {u}_{n 2} \\ {u}_{n 3}\end{matrix}\right] ,$
so kann man den Satz von Armspannungen als Vektor $U = \left[\begin{matrix}{U}_{p} \\ {U}_{n}\end{matrix}\right]$
schreiben, und entsprechend für andere Armgrößen. Eine mögliche orthogonale Transformation **T** in Matrixschreibweise ist dann beispielsweise, wiederum für die Spannungen aufgeschrieben, gegeben durch ${U}^{˜} = \left[\begin{matrix}{U}_{cm} \\ {U}_{ac 1} \\ {U}_{ac 2} \\ {U}_{dc} \\ {U}_{cc 1} \\ {U}_{cc 2}\end{matrix}\right] = \frac{1}{2 \sqrt{3}} \left[\begin{matrix}- \sqrt{2} & - \sqrt{2} & - \sqrt{2} & \sqrt{2} & \sqrt{2} & \sqrt{2} \\ - \sqrt{3} & 0 & \sqrt{3} & \sqrt{3} & 0 & - \sqrt{3} \\ 1 & - 2 & 1 & - 1 & 2 & - 1 \\ \sqrt{2} & \sqrt{2} & \sqrt{2} & \sqrt{2} & \sqrt{2} & \sqrt{2} \\ - \sqrt{3} & 0 & \sqrt{3} & - \sqrt{3} & 0 & \sqrt{3} \\ 1 & - 2 & 1 & 1 & - 2 & 1\end{matrix}\right] U = TU .$

Analog können die Armströme I und die maximal schaltbaren Armspannungen **V** umgerechnet werden, gegebenenfalls auch die Ladungen **Q.** Die Matrix **T** ist dabei orthonormal, d. h., alle Zeilen-bzw. Spaltenvektoren stehen aufeinander senkrecht und haben die Länge Eins. Die Inverse erhält man durch einfaches Transponieren. Dies ermöglicht eine einfache Rücktransformation in die Armgrößen. Aufgrund der Orthonormalität ist auch Leistungsinvarianz gegeben, $P = {U}^{T} I = {U}^{T} {T}^{- 1} TI = {U}^{T} {T}^{T} TI = {\left(TU\right)}^{T} TI ,$ d. h., die dem Teilumrichter zugeführte Leistung kann sowohl für Armgrößen als auch für Komponentengrößen bilanziert werden.

Bei drei Phasen ist aufgrund der zweidimensionalen Wechselstrom-Komponenten und Kreisstrom-Komponenten auch jede beliebige andere orthonormale Aufteilung möglich, sodass es eine Vielzahl von orthonormalen Matrizen **T** gibt, die herangezogen werden können. Werden orthogonale Transformationen verwendet, die nicht orthonormal sind, treten Skalierungsfaktoren auf, die berücksichtigt werden müssen.

Die zweckmäßigste Festlegung von Sollwerten für die Energie-Komponentengrößen ergibt sich, wenn alle Sollwerte außer dem für die Energie-Gleichstromgröße als Null gewählt werden, wobei der Sollwert der Energie-Gleichstromgröße so gewählt wird, dass sich die korrekte anliegende Gleichspannung an den Gleichspannungsanschlüssen ergibt. Dabei wird ausgenutzt, dass zu den Gleichstrom-Komponenten alle Arme gleich beitragen, vergleiche die vierte Zeile der obigen beispielhaften Matrix **T.** Somit kann insbesondere die Energieerhaltung erreicht werden. Für die maximal schaltbaren Armspannungen ergibt sich, wenn die Sollwerte mit einem Dach gekennzeichnet werden: ${\hat{V}}_{dc} = \sqrt{6} {U}_{zk}$ und ${\hat{V}}_{cm} = {\hat{V}}_{ac 1} = {\hat{V}}_{ac 2} = {\hat{V}}_{cc 1} = {\hat{V}}_{cc 2} = 0 .$

Dabei bezeichnet *U*_{zk} eine gewünschte Spannung für den Zwischenkreis, die in gewissen Grenzen frei gewählt werden kann.

Um die Energieregler zu realisieren, wird die Abweichung der jeweiligen Komponentengröße von ihrem Sollwert erfasst und dem Energieregler zugeführt. Dabei sei an dieser Stelle angemerkt, dass die grundsätzliche Möglichkeit, Zustandsgrößen zu erfassen und hieraus, insbesondere mittels der Transformation, Ist-Werte für die Komponentengrößen zu ermitteln, im Stand der Technik hinreichend bekannt ist und somit hier nicht näher dargelegt werden muss, genau wie die Umsetzung von Regelgrößen bzw. aus diesen ermittelten Strom-Komponentengrößen durch letztendliche konkrete Ansteuerung von Schaltern der Submodule, wozu rein beispielhaft auf die bereits genannte Dissertation von Daniel Dinkel verwiesen sei. Zusammenfassend kann gesagt werden, dass bei dem hier vorgestellten Regelkonzept, welches mehrere unabhängige Energieregler verwendet, kein periodischer Verlauf und keine feste Frequenz angenommen werden muss, sondern die Regelung allein mit Momentanwerten auskommt. Hierbei hat es sich als kein guter Ansatz erwiesen, die mehreren Arme eines Teilumrichters mit einer Mehrgrößenregelung zu behandeln, sondern es ist von großem Vorteil, zunächst in die Komponentengrößen zu transformieren. Die transformierten Komponentengrößen sind zueinander orthogonal, sodass mehrere, insbesondere bei drei Phasen sechs, Einzelregler entstehen, die unabhängig voneinander sind und getrennt voneinander optimal eingestellt werden können. Mit anderen Worten entstehen durch die orthogonale, bevorzugt orthonormale, Zerlegung voneinander entkoppelte Eingrößen-Regelkreise. Diese Regelungsstruktur erlaubt eine einfache Analyse der Regelvorgänge, ist intuitiv zu verstehen und kann bei der Inbetriebsetzung auch flexibel an Anforderungen aus der Praxis angepasst werden.

In konkreter Umsetzung der vorliegenden Erfindung kann vorgesehen sein, dass zur Ermittlung der sich durch eine Regelabweichung von einem jeweiligen Sollwert ergebenden Regelgrößen zumindest für jeden eine Strom-Kreisstrom komponente betreffenden Energieregler die Regelabweichung mit einer Gesamtsteuergröße multipliziert wird, die sich als gemäß der Transformation gewichtete Summe von Steuer-Armgrößen, deren Arme durch die entsprechende Regelgröße beeinflussbar sind, ergibt. Hierbei kann in die Ermittlung der Regelgröße auch ein Verstärkungsfaktor eingehen.

Wie bereits kurz diskutiert wurde, kann hinsichtlich einer Abweichung in der Energie-Gleichstromkomponente, im Beispiel V_{dc}, eine Anwendung des Energiesatzes ausreichend sein, um die Regelabweichung eingangsseitig auszuregeln. Mit anderen Worten kann der Energieregler für die Energie-Gleichstromkomponente so betrieben werden, dass dem Teilumrichter eingangsseitige die Leistung zugeführt wird, die ihm ausgangsseitig abgeführt wird. Im Beispiel des ofenseitigen Teilumrichters bei einem Lichtbogenofen kann die Energie-Gleichstromkomponente also über den Zwischenkreisstrom (entsprechend der Strom-Gleichstromkomponente) auf bzw. an den Sollwert gebracht werden.

Für die übrigen Komponentengrößen ist zu überlegen, mit welchen Ansatzfunktionen für die Kreisströme (und bezüglich der Energie-Common-Mode-Komponente ggf. auch des Gleichstroms) eine Regelabweichung am besten korrigiert werden kann. Dies sei anhand eines Beispiels näher erläutert. Verwendet man die oben eingeführte Transformation **T,** ist die Regelabweichung für die Energie-Common-Mode-Komponente V_{cm} größer als Null und will man diese Regelabweichung über die Kreisströme korrigieren, gilt wegen ${V}_{cm} = \frac{1}{\sqrt{6}} {\left[-1 -1 -1 1 1 1\right]}^{T} {V}_{cm} ,$

dass alle positiven Arme (p1, p2, p3) zu niedrige und alle negativen Arme (n1, n2, n3) zu hohe Ladungsmengen tragen. Es müssen also die positiven Arme geladen und die negativen Arme entladen werden. Dies kann erreicht werden, indem die Armströme der positiven Arme bei jeweils hoher Aussteuerung erhöht werden und die Armströme der negativen Arme bei hoher Aussteuerung erniedrigt werden. Zieht man nun in Betracht, dass gemäß der Transformation **T** ein positiver erster Kreisstrom die beiden ersten Arme entlädt und die beiden dritten Arme lädt, während ein positiver zweiter Kreisstrom die zweiten Arme entlädt und die ersten und dritten Arme jeweils halb so stark lädt, kann man mit der Aussteuerung $x = \frac{U}{V}$ als Steuer-Armgröße die Gleichungen $d {I}_{cc 1}^{cm} = {k}_{cm} \left(-{x}_{p 1}+{x}_{n 1}+{x}_{p 3}-{x}_{n 3}\right) d {\overline{V}}_{cm}$ und $d {I}_{cc 2}^{cm} = {k}_{cm} \frac{2}{\sqrt{3}} \left(0.5{x}_{p 1}-0.5{x}_{n 1}-{x}_{p 2}+{x}_{n 2}+0.5{x}_{p 3}-0.5{x}_{n 3}\right) d {\overline{V}}_{cm}$ ansetzen. Der Ausdruck in Klammern ist jeweils die Gesamtsteuergröße, k_{cm} ein Verstärkungsfaktor, und d*V̅*_{cm} die (ggf. über ein gleitendes Zeitfenster gemittelte) Regelabweichung. Eine vergleichbare Herleitung, die hinsichtlich der konkreten Ausführungsbeispiele noch diskutiert werden wird, ist möglich, wenn der Energieregler für die Energie-Common-Mode-Komponente wenigstens teilweise über die Strom-Gleichstromkomponente ausregeln soll.

Entsprechende Herleitungen ergeben sich für andere Komponentengrößen.

In der Praxis zeigt sich jedoch, dass der Aussteuergrad x als Steuer-Armgröße noch nicht ideal geeignet ist, um eine Ausreglung von Abweichungen in allen Komponentengrößen gleichmäßig zu erlauben. Ein Abstellen auf Armenergien selbst statt maximal schaltbare Armspannungen an sich erweist sich als günstiger, wobei jedoch dennoch die maximal schaltbaren Armspannungen als Energie-Komponentengrößen verwendet werden sollten. Dies hängt auch mit einer Abhängigkeit der Größe der Gesamtsteuergrößen von aktuellen Teilumrichterzustand ab, so dass in manchen Zeitabschnitten eine weniger effiziente Ausregelung für einen Teil der Energieregler resultiert.

In diesem Zusammenhang sieht eine besonders bevorzugte Weiterbildung vor, dass als die Steuer-Armgröße eine relative Armspannung, die sich bei Division der Armspannung durch die maximal mögliche Armspannung bei auf Nominalwert geladenen Kondensatoren ergibt, verwendet wird. In Formeln ausgedrückt kann als Steuer-Armgröße also ${x}^{˜} = \frac{U}{{U}_{nom}} ,$ verwendet werden. Diese relativen Armspannungen verlaufen über unterschiedliche Teilumrichterzustände andersartig als die Aussteuerungen x der vorangegangenen Abschnitte. Die Größe ***x̃*** korrespondiert mit den den Armen zugeführten Leistungen und nicht mit den den Armen zugeführten Ladungsmengen und hat so damit einen direkten Bezug zu den Armenergien. Vorteilhaft bei diesem Ansatz ist es, dass die Armspannungen vorgegeben und somit bekannt sind. Sie sind damit unabhängig vom jeweiligen Ladungszustand des jeweiligen Arms, denn der Teilumrichter muss unabhängig von seinen Ladezuständen stets die vorgegebene Spannung zur Verfügung stellen. Damit entsprechen auch Armleistungen stets den jeweiligen Vorgaben. Es zeigt sich, dass die Entkopplung der Energieregler auf dieser Grundlage noch besser möglich ist. Bei Verwendung der relativen Armspannungen als Steuer-Armgrößen ergeben sich Eigenschaften, die für den Entwurf eines guten linearen Reglers bei Mehrgrößensystemen wie dem Teilumrichtern erforderlich sind.

Zusammenfassend können so Ermittlungsvorschriften für Regelungsgrößen, insbesondere Anteile von Strom-Komponentengrößen, bereitgestellt werden, die von maximal schaltbaren Armspannungen (insbesondere einem entsprechenden gleitenden Mittelwert) ausgehen. Die maximal schaltbaren Armspannungen als Energie-Armgrößen bzw. Energie-Komponentengrößen korrespondieren direkt mit den Armenergien, verhalten sich aber nicht quadratisch, sondern linear, was für eine Regelung leichter zu beherrschen ist. Dazu werden Gesamtsteuergrößen bzw. Steuer-Armgrößen verwendet, die direkt mit den vorgegebenen Spannungen korrespondieren. Kreisströme sowie ggf. wenigstens eine weitere Strom-Komponentengröße werden so berechnet, dass die Energieregler vollständig entkoppelt sind. Das Streckenverhalten ist dabei integral mit einer zusätzlichen Totzeit, die zur Hälfte auf der erwähnten Mittelwertbildung und zur anderen Hälfte auf der Steuerheuristik beruht, welche für den Teilumrichter jeweils günstige Bedingungen zum Aufschalten eines geeigneten Kreisstroms abwarten muss. Am Ende können alle Einzelbeiträge (Regelungsgrößen als Anteile von Stromkomponenten) zu entsprechenden Gesamtströmen, insbesondere Gesamtkreisströmen addiert werden, die alleine oder ggf. unter Berücksichtigung weiterer Anteile die Strom-Komponentengrößen bilden, die zur Regelung eingesetzt werden sollen.

Die Energieregler können als P-Regler oder als Pl-Regler ausgeführt sein. Mit besonderem Vorteil werden Smith-Prädiktoren verwendet, die bei totzeitbehafteten Regelstrecken besonders zweckmäßig eingesetzt werden können.

Die gleichartigen Regelgrößen/Ausgangsgrößen der Energieregler werden, um die schlussendliche Armenergieregelung bereitzustellen, für jeden Teilumrichter addiert. Somit sind bezüglich der Armenergieregelung einzustellende Momentanwerte für die Kreisströme sowie den Gleichstrom und/oder die Wechselströme bekannt.

In einer bevorzugten Weiterbildung der vorliegenden Erfindung kann vorgesehen sein, dass bei einem zwei Teilumrichter aufweisenden Multilevelumrichter, wobei die Wechselstromanschlüsse eines netzseitigen Teilumrichters mit einem Stromnetz und die Wechselstromanschlüsse eines lastseitigen Teilumrichters, insbesondere bei einem Lichtbogenofen als Last eines ofenseitigen Teilumrichters, mit einer Last verbunden sind, die Energieregler für die Energie-Gleichstromkomponente zu einem gemeinsamen Gleichstromkomponentenregler zusammengefasst sind. Das bedeutet, die beiden auf die Energie-Gleichstromkomponente bezogenen Energieregler (DC-Regler) des netzseitigen und des lastseitigen Teilumrichters können als ein gemeinsamer Gleichstromkomponentenregler realisiert werden. Dieser nutzt dann als Eingangsgrößen die entsprechenden Regelabweichungen für die jeweiligen Energie-Gleichstromkomponenten und gibt als Ausgangsgrößen eine Strom-Gleichstromkomponente, die den Gleichstrom im Zwischenkreis zwischen den Teilumrichtern beschreibt, und insbesondere auch Strom-Wechselstromkomponenten für den netzseitigen Teilumrichter aus. Eine derartige Zusammenfassung ist besonders vorteilhaft, da auf diese Weise Leistungsschwankungen auf der Wechselspannungsseite des lastseitigen Teilumrichters nicht vollumfänglich an das Stromnetz weitergegeben werden, sondern nur geglättet auf der Wechselspannungsseite des netzseitigen Teilumrichters auftauchen. Gerade bei Lichtbogenöfen können derartige Lastschwankungen, teils auch überraschend, auftreten.

Nachdem an der Wechselspannungsseite der Teilumrichter üblicherweise kein Sternpunkt angeschlossen ist, ist, wie bereits erwähnt, der Common-Mode-Strom, also die Strom-Common-Mode-Komponente, üblicherweise Null. Allerdings stellt die Common-Mode-Spannung, also die Spannungs-Common-Mode-Komponente, einen Freiheitsgrad dar, der zumindest zur Verbesserung der Regelung genutzt werden kann, wie bereits erwähnt beispielsweise hinsichtlich der Ausregelung der Energie-Common-Mode-Komponente über die Spannungs-Gleichstrom-Komponente. Mithin kann im Rahmen der vorliegenden Erfindung vorgesehen sein, dass die Spannungs-Common-Mode-Komponente derart vorgegeben wird, dass alle Armspannungen möglichst lange nahe Null oder nahe einem Referenzpotential, das der an den Gleichspannungsanschlüssen anliegenden Gleichspannung entspricht, liegen. Dadurch kann bei jedem Umrichterarm nahe 0 V schadlos auch ein größerer Strom über längere Zeit aufrechterhalten werden, während bei jedem Arm nahe dem Referenzpotential sehr effektiv ein Aufladen mit kleinen Armströmen ermöglicht wird. Hierbei sollten zweckmäßigerweise zu starke Sprünge im zeitlichen Verlauf der Spannungs-Common-Mode-Komponente vermieden werden, also der Verlauf geglättet werden, da ansonsten Schäden an einer wechselspannungsseitig vorgesehenen Last auftreten könnten. Beispielsweise könnten bei einem Lichtbogenofen Sprünge bei der Commonmodespannung Schwierigkeiten bei der Ansteuerung des Lichtbogenofens zur Folge haben, da die Isolierung des Ofentransformators wie des Ofengefäßes gegen Erde belastet wird. Diese verhält sich jeweils wie eine Reihenschaltung mehrerer Kondensatoren, die dazu umgeladen werden müssen. Dabei teilen sich die Teilspannungen entsprechend der Teilkapazitäten und nicht entsprechend den Durchschlagfeldstärken der jeweiligen Isoliermaterialien auf, so dass es zu kurzzeitigen lokalen Überschreitungen der zugehörigen Durchschlagfeldstärken in den jeweiligen Isoliermaterialien kommen könnte. Die Folge wären so genannte Teilentladungen, die mit der Zeit Isoliermaterialien schädigen können. Eine Glättung wirkt dem entgegen, da dann Kriechströme in den Isoliermaterialien Überspannungen abbauen können, bevor Durchschlagfeldstärken erreicht werden.

Vorzugsweise kann in einer Armleistungsminimierungsfunktion zur Minimierung der in einer Zykluszeit den Armen zugeführten Leistungen wenigstens eine einen weiteren einzustellenden Kreisstrom beschreibende Minimierungsgröße ermittelt werden, die zu den den einzustellenden Kreisstrom beschreibenden Regelgrößen addiert wird. Bevorzugt werden weitere Strom-Kreisstromkomponenten bzw. Änderungen, also Anteile, diesbezüglich ermittelt. Die Armleistungsminimierungsfunktion minimiert also in jedem Zeitzyklus die den Armen zugeführte elektrische Leistung. Die Aufgabe der Armleistungsminimierungsfunktion ist es, die Schwankungen der Armenergien durch Minimierung der ausgetauschten Leistung eines jeden Armes infolge der Wechselstromflüsse der jeweiligen Teilumrichter als solche zu minimieren. Die Ausgangsgrößen der Armleistungsminimierungsfunktion sind Minimierungsgrößen, die weitere einzustellende Kreisströme des jeweiligen Teilumrichters beschreiben und die zu den ersten einzustellenden Kreisströmen, die durch die Energieregler ermittelt worden, addiert werden.

Dabei sei noch angemerkt, dass eine Anwendung der Transformation sich hinsichtlich der Leistung in der Armleistungsminimierung nicht als zweckmäßig erwiesen hat. Die entstehenden Größen sind nicht sinnvoll interpretierbar. Mithin wird die Transformation in der Armleistungsminimierung nur für die Armspannungen und die Armströme verwendet, um geeignete Kreisstrom-Anteile im korrekten Koordinatensystem herzuleiten. In der Armleistungsminimierungsfunktion kann beispielsweise eine Zielfunktion minimiert werden, die lauten kann: ${J}_{p} \left({I}_{cc 1}^{p}, {I}_{cc 2}^{p}\right) = {\sum }_{k = 1}^{3} {p}_{p k}^{2} + {\sum }_{k = 1}^{3} {p}_{n k}^{2} .$

Neben dem Verfahren betrifft die vorliegende Erfindung auch eine Steuereinrichtung für einen Multilevelumrichter, der wenigstens einen Teilumrichter mit einer Mehrzahl von Umrichterarmen aufweist, die Gleichspannungsanschlüsse des Teilumrichters mit mehreren, insbesondere drei, jeweils einer Phase zugeordneten Wechselspannungsanschlüssen des Teilumrichters verbinden und jeweils mehrere Submodule mit einem Kondensator und ansteuerbaren Schaltern aufweisen, wobei die Steuereinrichtung eingerichtet ist, zur Armenergieregelung ein erfindungsgemäßes Verfahren durchzuführen. Im Betrieb führt die Steuereinrichtung mithin das erfindungsgemäße Armenergieregelungsverfahren aus. Sämtliche Ausführungen bezüglich des erfindungsgemäßen Verfahrens lassen sich analog auf die erfindungsgemäße Steuereinrichtung übertragen und umgekehrt, so dass auch mit der Steuereinrichtung die genannten Vorteile erhalten werden können. Die Steuereinrichtung kann auch zu einer übergeordneten Leistungsreglung hinsichtlich einer Last, beispielsweise eines Lichtbogenofens, ausgebildet sein, welche über den Multilevelumrichter an ein Stromnetz bzw. eine Stromquelle angeschlossen ist.

Die Steuereinrichtung kann wenigstens einen Prozessor und wenigstens ein Speichermittel umfassen. Durch Hardware und/oder Software können Funktionseinheiten gebildet sein, um Schritte des erfindungsgemäßen Verfahrens durchzuführen bzw. entsprechend der obigen Beschreibung Energieregler zu bilden. Beispielsweise können in dem Speichermittel die Transformation und die Sollwerte und/oder Sollwertintervalle bereitgestellt werden, wobei eine Erfassungseinheit aktuelle Zustandsgrößen ermitteln kann und eine Ermittlungseinheit die aktuellen Energie-Komponentengrößen daraus ermitteln kann. Die Ermittlungseinheit kann auch unter Nutzung der Sollwerte bereits Regelabweichungen ermitteln, insbesondere, wenn der Sollwert nicht Null beträgt. Zweckmäßigerweise werden diese Regelabweichungen an Reglereinheiten für die Energieregler weitergegeben, die als Ausgangsgrößen dann die beschriebenen Regelgrößen liefern. Auch eine Armleistungsminimierereinheit kann optional vorgesehen sein. Zur konkreten Umsetzung der verschiedenen Ausgangsgrößen geeignete Vorgehensweisen und Funktionseinheiten sind im Stand der Technik bereits bekannt und können auch im Rahmen der vorliegenden Erfindung eingesetzt werden.

Ein erfindungsgemäßes Computerprogramm ist direkt in ein Speichermittel einer Steuereinrichtung für einen Multilevelumrichter ladbar und weist Programmmittel derart auf, dass bei Ausführung des Computerprogramms in der Steuereinrichtung diese veranlasst wird, die Schritte eines erfindungsgemäßen Armenergieregelungsverfahrens durchzuführen. Das Computerprogramm kann auf einem elektronisch lesbaren Datenträger gespeichert sein, welcher mithin darauf gespeicherte Steuerinformation umfasst, die wenigstens ein erfindungsgemäßes Computerprogramm umfassen und derart ausgestaltet sind, dass bei Verwendung des Datenträgers in einer Steuereinrichtung für einen Multilevelumrichter die Steuereinrichtung eingerichtet wird, ein erfindungsgemäßes Armenergieregelungsverfahren durchzuführen.

Ein erfindungsgemäßer Multilevelumrichter weist wenigstens einen Teilumrichter mit einer Mehrzahl von Umrichterarmen auf, die Gleichspannungsanschlüsse des Teilumrichters mit mehreren, insbesondere drei, jeweils einer Phase zugeordneten Wechselspannungsanschlüssen des Teilumrichters verbinden und jeweils mehrere Submodule mit einem Kondensator und ansteuerbaren Schaltern aufweisen, wobei der Multilevelumrichter eine erfindungsgemäße Steuereinrichtung aufweist, die dessen Betrieb steuert.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- Fig 1: einen Lichtbogenofen und dessen Energieversorgung,
- Fig. 2: einen Arm eines Multilevelumrichters,
- Fig. 3: ein Submodul,
- Fig. 4: ein weiteres Submodul,
- Fig. 5: einen Ablaufplan eines Ausführungsbeispiels des erfindungsgemäßen Verfahrens, und
- Fig. 6: den funktionalen Aufbau einer erfindungsgemäßen Steuereinrichtung.

### Beschreibung der Ausführungsformen

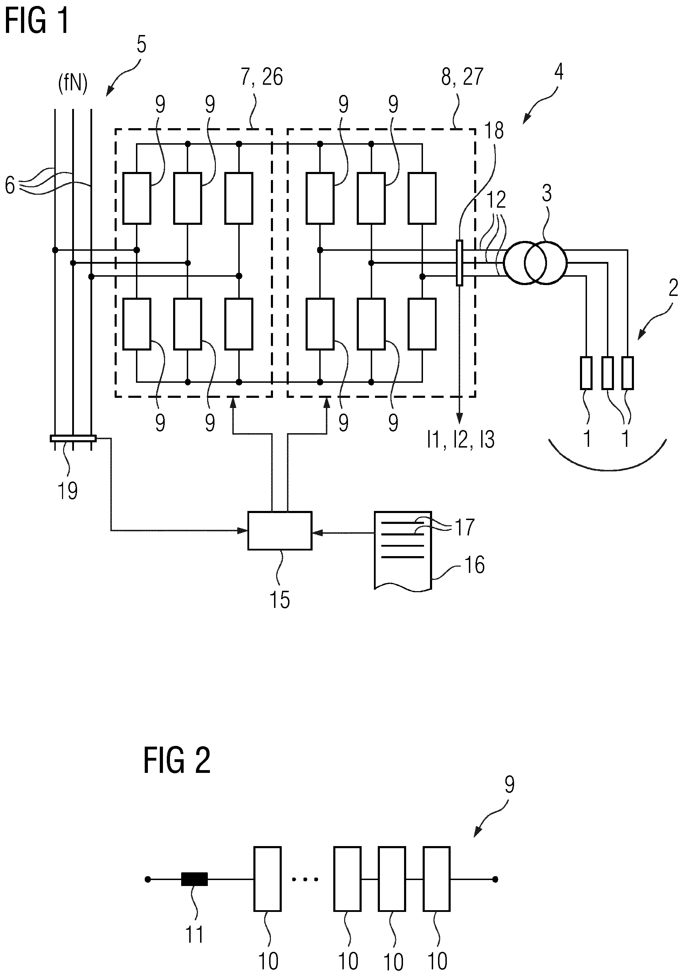

Fig. 1 zeigt schematisch einen Drehstrom-Lichtbogenofen 2 und dessen Energieversorgung. Elektroden 1 des Drehstrom-Lichtbogenofens 2 werden über einen Ofentransformator 3 von einem Multilevelumrichter 4 mit elektrischer Energie versorgt. Der Lichtbogenofen 2 kann von beliebiger Art sein. Es kann sich um einen Lichtbogenofen 2 im engeren Sinne (EAF = electric arc furnace) handeln. Es kann sich aber auch um einen sogenannten SAF (= submerged arc furnace) oder um einen SMELTER handeln. In dem Lichtbogenofen 2 kann nach Bedarf Eisen, Stahl, Aluminium oder auch ein anderes Metall geschmolzen werden.

Der Multilevelumrichter 4 wird seinerseits in aller Regel aus einem Versorgungsnetz 5 mit mehreren eingangsseitigen Phasen 6 (in der Regel drei Phasen 6) mit elektrischer Energie versorgt. Das Versorgungsnetz 5 kann beispielsweise ein Mittelspannungsnetz mit einer Nennspannung von 11 kV, 30 kV, 33 kV oder - in Einzelfällen - von 110 kV sein. Das Versorgungsnetz 5 wird mit einer Netzfrequenz fN betrieben. Die Netzfrequenz fN liegt in der Regel bei 50 Hz oder 60 Hz.

Der Multilevelumrichter 4 ist zwischen dem Versorgungsnetz 5 und dem Ofentransformator 3 angeordnet, der Ofentransformator 3 zwischen dem Multilevelumrichter 4 und den Elektroden 1. Die elektrische Energie fließt somit vom Versorgungsnetz 5 zum Multilevelumrichter 4, von dort weiter zum Ofentransformator 3 und von dort schließlich zu den Elektroden 1.

Konkret in der Ausgestaltung von Fig. 1 ist der Multilevelumrichter 4 als Zwischenkreisumrichter ausgebildet, der zum Versorgungsnetz 5 hin einen eingangsseitigen Gleichrichter 7 als ersten, netzseitigen Teilumrichter 26 und zum Ofentransformator 3 hin einen ausgangsseitigen Wechselrichter 8 als zweiten, ofenseitigen Teilumrichter 27 aufweist. Der Gleichrichter 7 und der Wechselrichter 8 sind über einen Gleichspannungskreis miteinander verbunden.

Multilevelumrichter sind Fachleuten allgemein bekannt. Multilevelumrichter weisen - siehe auch Fig. 2 - Umrichterarme 9 auf. Von den Armen 9 sind in Fig. 1 exemplarisch nur einige wenige mit ihrem Bezugszeichen versehen.

Die Arme 9 bestehen gemäß Fig. 2 ihrerseits aus einer mehrstufigen Reihenschaltung von Submodulen 10. In der Regel sind pro Arm 9 acht oder mehr derartiger Submodule 10 vorhanden. Die Submodule 10 sind untereinander gleich aufgebaut. In der Regel befindet sich am Ende der Reihenschaltung weiterhin eine Drossel 11. Die Drossel 11 befindet sich bei einem Arm 9 des Gleichrichters 7 meist an dem einer eingangsseitigen Phase 6 zugewandten Ende des jeweiligen Armes 9. In analoger Weise befindet sich die Drossel 11 bei einem Arm 9 des Wechselrichters 8 an dem einer ausgangsseitigen Phase 12 (siehe Fig. 1) zugewandten Ende des jeweiligen Armes 9.

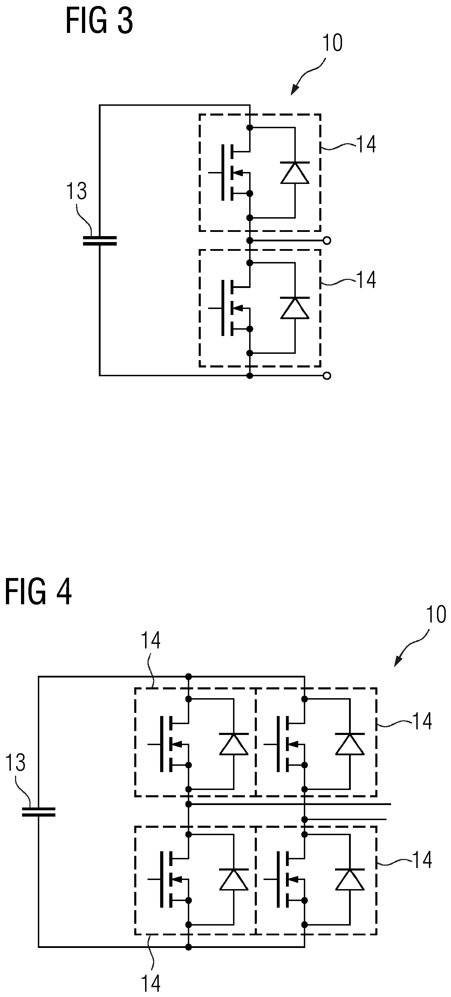

Gemäß Fig. 3 umfasst jedes Submodul 10 einen Speicherkondensator 13 und selbstgeführte Halbleiterschalter 14, die hier als Einheit aus einem Feldeffekttransistor und einer Diode gezeigt sind. Der Begriff "selbstgeführt" bedeutet, dass die Halbleiterschalter 14 durch den Halbleiterschaltern 14 von außen zugeführte Steuersignale sowohl zuschaltbar als auch abschaltbar sind. Beispielsweise können die selbstgeführten Halbleiterschalter 14 auch als IGBTs ausgebildet sein. Der Begriff "selbstgeführt" steht im Gegensatz zum Begriff "netzgeführt". Dieser Begriff bedeutet, dass der jeweilige Halbleiterschalter zwar gezielt zugeschaltet werden kann, jedoch nicht durch ein externes Steuersignal abgeschaltet werden kann. Ein Beispiel für einen netzgeführten Halbleiterschalter ist ein "normaler" Thyristor.

Gemäß Fig. 3 weisen die Submodule 10 jeweils einen einzigen Speicherkondensator 13 und genau zwei Halbleiterschalter 14 auf. Diese Konfiguration ist die Minimalkonfiguration der Submodule 10. Alternativ könnten die Submodule 10 gemäß der Darstellung von Fig. 4 beispielsweise einen Speicherkondensator 13 und vier Halbleiterschalter 14 in Brückenschaltung aufweisen. Auch könnten die Submodule 10 mehrere einzeln schaltbare Speicherkondensatoren 13 aufweisen. In diesem Fall müssen pro eigenständig schaltbarem Speicherkondensator 13 mindestens zwei Halbleiterschalter 14 vorhanden sein.

Die Halbleiterschalter 14 jedes Submoduls 10 sind unabhängig von den Halbleiterschaltern 14 der anderen Submodule 10 schaltbar. Dies gilt unabhängig davon, ob die anderen Submodule 10 im selben oder in einem anderen Arm des Teilumrichters 26, 27 angeordnet sind wie das betreffende Submodul 10. Je nach Schaltzustand der Halbleiterschalter 14 des jeweiligen Submoduls 10 ist der Speicherkondensator 13 des jeweiligen Submoduls 10 alternativ überbrückt oder aktiv. Wenn der in Fig. 3 obere Halbleiterschalter 14 eines Submoduls 10 geschlossen ist und der andere Halbleiterschalter 14 geöffnet ist, ist der Speicherkondensator 13 des jeweiligen Submoduls 10 aktiv. Wenn umgekehrt der in Fig. 3 obere Halbleiterschalter 14 geöffnet ist und der untere Halbleiterschalter 14 geschlossen ist, ist der Speicherkondensator 13 des jeweiligen Submoduls 10 überbrückt. Wenn der Speicherkondensator 13 aktiv ist, trägt die über dem Speicherkondensator 13 abfallende Armspannung zur resultierenden Spannung des jeweiligen Armes 9 bei. Ein in dem jeweiligen Arm 9 fließender Armstrom bewirkt - je nach Richtung des in dem Arm 9 fließenden Armstromes und je nach Ladungszustand des Speicherkondensators 13 - ein Laden oder ein Entladen des Speicherkondensators 13. Wenn der Speicherkondensator 13 hingegen überbrückt ist, trägt die über dem Speicherkondensator 13 abfallende Spannung nicht zur resultierenden Armspannung des jeweiligen Armes 9 bei. Ein in dem jeweiligen Arm 9 fließender Armstrom bewirkt weder ein Laden noch ein Entladen des Speicherkondensators 13.

In analoger Weise ist auch der Speicherkondensator 13 des Submoduls 10 von Fig. 4 je nach Ansteuerzustand der Halbleiterschalter 14 aktiv oder überbrückt. Im Falle der Ausgestaltung von Fig. 4 existiert jedoch ein weiterer Schaltzustand, bei dem die über dem Speicherkondensator 13 abfallende Spannung mit inverser Polung zur resultierenden Armspannung des jeweiligen Armes 9 beiträgt.

Der Multilevelumrichter 4 wird gemäß Fig. 1 von einer Steuereinrichtung 15 gesteuert. Mittels der Steuereinrichtung 15 erfolgt insbesondere die Ansteuerung der Halbleiterschalter 14 der Submodule 10. Die Art und Weise, wie die Halbleiterschalter 14 der Submodule 10 gemäß ermittelter Vorgaben angesteuert werden, ist Fachleuten bekannt.

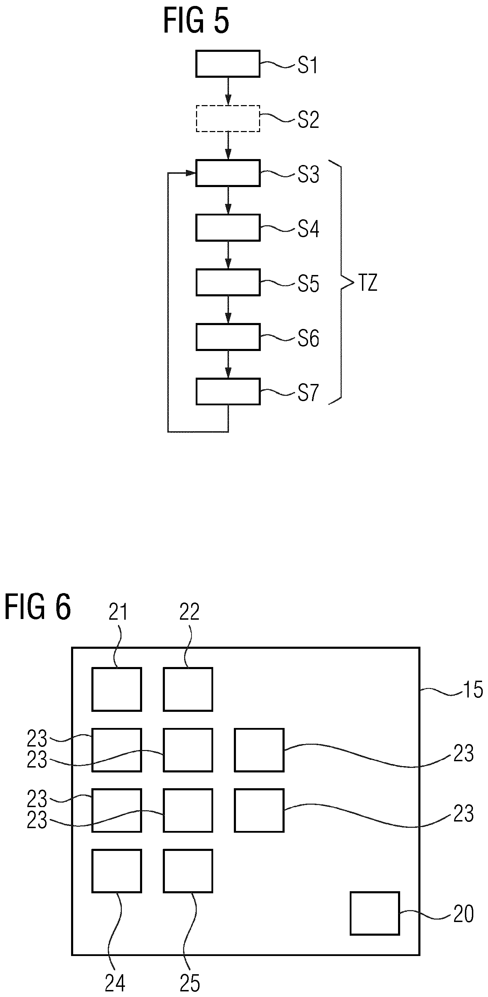

Die Steuereinrichtung 15 ist mit einem Computerprogramm 16 programmiert. Das Computerprogramm 16 umfasst Maschinencode 17, der von der Steuereinrichtung 15 unmittelbar abarbeitbar ist. Die Programmierung der Steuereinrichtung 15 mit dem Computerpprogramm 16 bzw. - im Ergebnis gleichbedeutend - die Abarbeitung des Maschinencodes 17 durch die Steuereinrichtung 15 bewirkt, dass die Steuereinrichtung 15 ein Armenergieregelungsverfahren ausführt, das nachstehend in Verbindung mit Fig. 5 näher erläutert wird.

Die Steuereinrichtung 15 führt zur Armenergieregelung bzw. allgemein zur Steuerung bei einer Betriebsphase die im Ablaufplan der Fig. 5 gezeigten Schritte aus.

In einem Schritt S1 wird eine orthonormale Transformation **T** bereitgestellt. Vorliegend wird die oben bereits eingeführte Form verwendet, das bedeutet, Ströme werden gemäß ${I}^{˜} = \left[\begin{matrix}{I}_{cm} \\ {I}_{ac 1} \\ {I}_{ac 2} \\ {I}_{dc} \\ {I}_{cc 1} \\ {I}_{cc 2}\end{matrix}\right] = \frac{1}{2 \sqrt{3}} \left[\begin{matrix}- \sqrt{2} & - \sqrt{2} & - \sqrt{2} & \sqrt{2} & \sqrt{2} & \sqrt{2} \\ - \sqrt{3} & 0 & \sqrt{3} & \sqrt{3} & 0 & - \sqrt{3} \\ 1 & - 2 & 1 & - 1 & 2 & - 1 \\ \sqrt{2} & \sqrt{2} & \sqrt{2} & \sqrt{2} & \sqrt{2} & \sqrt{2} \\ - \sqrt{3} & 0 & \sqrt{3} & - \sqrt{3} & 0 & \sqrt{3} \\ 1 & - 2 & 1 & 1 & - 2 & 1\end{matrix}\right] I = TI$
und Spannungen werden gemäß ${U}^{˜} = \left[\begin{matrix}{U}_{cm} \\ {U}_{ac 1} \\ {U}_{ac 2} \\ {U}_{dc} \\ {U}_{cc 1} \\ {U}_{cc 2}\end{matrix}\right] = \frac{1}{2 \sqrt{3}} \left[\begin{matrix}- \sqrt{2} & - \sqrt{2} & - \sqrt{2} & \sqrt{2} & \sqrt{2} & \sqrt{2} \\ - \sqrt{3} & 0 & \sqrt{3} & \sqrt{3} & 0 & - \sqrt{3} \\ 1 & - 2 & 1 & - 1 & 2 & - 1 \\ \sqrt{2} & \sqrt{2} & \sqrt{2} & \sqrt{2} & \sqrt{2} & \sqrt{2} \\ - \sqrt{3} & 0 & \sqrt{3} & - \sqrt{3} & 0 & \sqrt{3} \\ 1 & - 2 & 1 & 1 & - 2 & 1\end{matrix}\right] U = TU .$
transformiert. Die Rücktransformation kann dabei einfach durch Multiplikation mit der transponierten Matrix ***T***^{T} durchgeführt werden, da ***T*** orthonormal ist. Hieraus folgt im Übrigen für den Zusammenhang zu den Zwischenkreisspannungen (Index zk): $\frac{{I}_{dc}}{{I}_{zk}} = \sqrt{\frac{2}{3}} , \frac{{U}_{dc}}{{U}_{zk}} = \sqrt{\frac{3}{2}} .$

Die Transformation **T** ist auch auf Energie-Armgrößen, hier die maximal schaltbare Armspannung **V,** anwendbar, wie bereits ausführlich diskutiert. Auch für die Bezeichnungen der Komponentengrößen gilt das oben dargelegte fort.

Für die Energie-Komponentengrößen, die sich entsprechend ergeben, werden Sollwerte und gegebenenfalls zusätzlich auch Sollintervalle um diese Sollwerte bereitgestellt. Vorliegend sind die Sollwerte für alle Energie-Komponentengrößen außerhalb der Energie-Gleichstromkomponente V_{dc} Null; letztere ist so gewählt, dass Energieerhaltung gilt, also ${\hat{V}}_{dc} = \sqrt{6} {U}_{zk} .$

In einem optionalen Schritt S2 kann eine Common-Mode-Spannung, das bedeutet, ein Verlauf für die Spannungs-Common-Mode-Komponente U_{cm}, vorgegeben werden. Diese kann die Regelbarkeit bzw. Steuerbarkeit insgesamt unterstützen, wobei bevorzugt zu harte Sprünge vermieden bzw. geglättet werden. Wird der Verlauf funktional vorgegeben, können Werte, die zu zu hohen Spannungen, insbesondere zu hohem Spannungs-Wechselstromkomponenten führen können, sozusagen abgeschnitten werden. Der geeignete Verlauf für die Common-Mode-Spannung kann von dem individuellen Teilumrichter 26, 27 abhängen. Gegebenenfalls kann sich der Verlauf auch dynamisch während der im Folgenden diskutierten Armenergieregelung verändern. Ein rein beispielhafter, zweckmäßiger zeitlicher Verlauf der Common-Mode-Spannung kann beispielsweise durch ${U}_{cm} = 20 kV \frac{2}{π} atan \left(cos\left(3ωt\right)\right)$ gegeben sein, wobei zu große Werte abgeschnitten werden.

Im Folgenden führt die Steuereinrichtung zur Armenergieregelung und Armleistungsminimierung zyklisch immer wieder Schritte S3 bis S7 aus. Die Ausführung erfolgt mit einer Zykluszeit TZ, die beispielsweise 1 ms oder weniger betragen kann, bevorzugt 200 µs oder weniger.

In einem Schritt S3 werden aktuelle Zustandsgrößen erfasst. Konkret werden beispielsweise Sollwerte für die Spannungs-Wechselstromkomponenten U_{ac1} und U_{ac2} von einer übergeordneten Ofenregelung bereitgestellt. Weitere Zustandsgrößen sind die sich nicht schnell ändernden Strom-Wechselstromkomponenten I_{ac1} und I_{ac2}, die beispielsweise über geeignete Messmittel 18 (vergleiche Fig. 1) erfasst werden können. Auch eine Ermittlung mittels Simulation und/oder eine Kombination dieser Ermittlungswege ist denkbar. Analog können AC-Größen des Versorgungsnetzes 5 mittels Messmitteln 19 ermittelt werden oder anderweitig bekannt sein.

In einem Schritt S4 werden aus den Zustandsgrößen die aktuellen Energie-Komponentengrößen bestimmt. Für alle Energie-Komponentengrößen außer der Energie-Gleichstromkomponente V_{dc} entsprechen diese bereits der Abweichung vom Soll (Null), für die Energie-Gleichstromkomponente kann die Abweichung mit dem oben genannten Sollwert ermittelt werden. Auch Steuer-Armgrößen werden im Schritt S4 berechnet, vorliegend relative Armspannungen ${x}^{˜} = \frac{U}{{U}_{nom}} .$

Die Sollabweichungen werden in einem Schritt S5 jeweils einzelnen Energiereglern für jede Energie-Komponentengröße zugeführt, also im vorliegenden Fall sechs Energiereglern für jeden Teilumrichter 26, 27, nämlich einem CM-Energieregler, einem DC-Energieregler, einem AC1-Energieregler, einem AC2-Energieregler, einem CC1-Energieregler und einem CC2-Energieregler, die unabhängig voneinander als Ausgangsgrößen und somit Regelgrößen Strom-Komponentengrößen, bzw. konkret Anteile dieser, liefern, die zur Ausregelung eventuell bestehender Regelabweichungen beitragen. Für den netzseitigen Teilumrichter 26 (Gleichrichter 7) liefern:
- die AC-Energieregler, der CM-Energieregler und der CC-Energieregler Kreisströme, und
- der DC-Energieregler AC-Ströme,
   und für den ofenseitigen Teilumrichter 27 (Wechselrichter 8) liefern:
- die AC-Energieregler und die CC-Energieregler Kreisströme, und
- der CM-Energieregler und der DC-Energieregler Gleichströme.

Die Gleichströme, Wechselströme und Kreisströme sind hierbei Anteile entsprechender Strom-Komponentengrößen, wobei gleichartige Ausgangsgrößen addiert werden können, um diese Strom-Komponentengrößen zu ermitteln. Die Energieregler können als P-Regler oder Pl-Regler ausgeführt sein und sind insbesondere als Smith-Prädiktoren ausgebildet.

In einem Ausführungsbeispiel können die DC-Energieregler der beiden Teilumrichter 26, 27 auch zu einem gemeinsamen Regler zusammengefasst sein, um Leistungsschwankungen auf der Wechselspannungsseite des ofenseitigen Teilumrichters 27 nicht vollumfänglich, sondern nur geglättet, an das Versorgungsnetz 2 weiterzugeben.

Zur Ermittlung der sich durch eine Regelabweichung von einem jeweiligen Sollwert ergebenden Regelgrößen wird für zumindest die Kreisströme ausgebenden Energieregler die Regelabweichung mit einer Gesamtsteuergröße multipliziert wird, die sich als gemäß der Transformation gewichtete Summe von Steuer-Armgrößen, deren Arme durch die entsprechende Regelgröße beeinflussbar sind, ergibt.

Dies sei konkret anhand des ofenseitigen Teilumrichters 27 (Wechselrichter 8) nochmals genauer erläutert.

Für die AC1-Komponente *V̅*_{ac1} wird mit ${V}_{ac 1} = 0.5 {\left[-1 0 1 1 0 -1\right]}^{T} V$ angesetzt: $d {I}_{cc 1}^{ac 1} = {k}_{ac 1} \left(-{{x}^{˜}}_{p 1}+{{x}^{˜}}_{n 1}-{{x}^{˜}}_{p 3}+{{x}^{˜}}_{n 3}\right) d {\overline{V}}_{ac 1}$ $d {I}_{cc 2}^{ac 1} = 0 .$

Entsprechend wird für die AC2-Komponente *V̅*_{ac2} mit ${V}_{ac 2} = \frac{1}{\sqrt{3}} {\left[0.5 -1 0.5 -0.5 1 -0.5\right]}^{T} {V}_{ac 2}$ angesetzt: $d {I}_{cc 1}^{ac 2} = \frac{1}{2 \sqrt{3}} {k}_{ac 2} \left({{x}^{˜}}_{p 1}-{{x}^{˜}}_{n 1}-{{x}^{˜}}_{p 3}+{{x}^{˜}}_{n 3}\right) d {\overline{V}}_{ac 2}$ $d {I}_{cc 2}^{ac 2} = {k}_{ac 2} \frac{1}{\sqrt{3}} \left(-{{x}^{˜}}_{p 1}+{{x}^{˜}}_{n 1}-2{{x}^{˜}}_{p 2}+2{{x}^{˜}}_{n 2}-{{x}^{˜}}_{p 3}+{{x}^{˜}}_{n 3}\right) d {\overline{V}}_{ac 2} .$

Für die DC-Komponente *V̅*_{dc} gilt: ${V}_{dc} = \frac{1}{\sqrt{6}} \left[1 1 1 1 1 1\right] {V}_{dc}$ und somit erfolgt die Ausregelung nicht über Kreisströme, $d {I}_{cc 1}^{dc} = d {I}_{cc 2}^{dc} = 0$ sondern hier $d {I}_{dc} = - {{k}^{˜}}_{dc} \left({{x}^{˜}}_{p 1}+{{x}^{˜}}_{n 1}+{{x}^{˜}}_{p 2}+{{x}^{˜}}_{n 2}+{{x}^{˜}}_{p 3}+{{x}^{˜}}_{n 3}\right) d {\overline{V}}_{dc} = - {k}_{dc} d {\overline{V}}_{dc} .$

Für **die** erste Kreiskomponente *V̅*_{cc1} ist ${V}_{cc 1} = \frac{1}{2} {\left[-1 0 1 -1 0 1\right]}^{T} {V}_{cc 1}$ und somit wird angesetzt $d {I}_{cc 1}^{cc 1} = - {{k}^{˜}}_{cc 1} \left({{x}^{˜}}_{p 1}+{{x}^{˜}}_{n 1}+{{x}^{˜}}_{p 3}+{{x}^{˜}}_{n 3}\right) d {\overline{V}}_{cc 1} \approx - {k}_{cc 1} d {\overline{V}}_{cc 1}$ $d {I}_{cc 2}^{cc 1} = 0 .$

Entsprechend für die zweite Kreiskomponente *V̅*_{cc2} ${V}_{cc 2} = \frac{1}{\sqrt{3}} {\left[0.5 -1 0.5 0.5 -1 0.5\right]}^{T} {V}_{cc 2}$ und zur Ermittlung der Regelgrößen $d {I}_{cc 1}^{cc 2} = 0$ $d {I}_{cc 2}^{cc 2} = - {{k}^{˜}}_{cc 2} \left(0.5{{x}^{˜}}_{p 1}+0.5{{x}^{˜}}_{n 1}+{{x}^{˜}}_{p 2}+{{x}^{˜}}_{n 2}+0.5{{x}^{˜}}_{p 3}+0.5{{x}^{˜}}_{n 3}\right) d {\overline{V}}_{cc 2} \approx - {k}_{cc 2} d {\overline{V}}_{cc 2} .$

Die Common-Mode-Komponente soll ofenseitig über einen Gleichstrom ausgeregelt werden. Es gilt ${V}_{cm} = \frac{1}{\sqrt{6}} {\left[-1 -1 -1 1 1 1\right]}^{T} {V}_{cm} ,$ so dass $d {I}_{dc}^{cm} = {{k}^{˜}}_{cm} \left({{x}^{˜}}_{p 1}-{{x}^{˜}}_{n 1}+{{x}^{˜}}_{p 2}-{{x}^{˜}}_{n 2}+{{x}^{˜}}_{p 3}-{{x}^{˜}}_{n 3}\right) d {V}_{cm}$ angesetzt werden kann.

In einem Schritt S6 wird eine Armleistungsminimierung durchgeführt. Dort wird die den Armen 9 zugeführte elektrische Leistung minimiert. So sollen die Schwankungen der Armenergien durch Minimierung der ausgetauschten Leistung eines jeden Armes 9 infolge der Wechselstromflüsse der jeweiligen Teilumrichter 26, 27 minimiert werden. Die Ausgangsgrößen des Armleistungsminimierers bzw. einer entsprechend angewandten Armleistungsminimierungsfunktion, die eine Zielfunktion, wie oben bereits diskutiert, minimiert, sind wiederum Kreisströme, also Anteile für die Strom-Kreisstromkomponenten.

In einem Schritt S7 werden die durch die Energieregler und den Armleistungsminierer ermittelten Anteile der jeweiligen Strom-Komponentengrößen sowie gegebenenfalls vorhandene weitere Anteile addiert, um die Strom-Komponentengrößen, insbesondere die Strom-Kreisstromkomponenten, die Strom-Gleichstromkomponente bzw. die Strom-Wechselstromkomponenten, zu erhalten.

Es sei noch angemerkt, dass für die Strom-Gleichstromkomponente auch ein Vorsteuerwert, beispielsweise berechnet über die Sollleistung des Ofenreglers, ermittelt und in die Ermittlung der Strom-Gleichstromkomponente additiv aufgenommen werden kann.

Ebenso im Schritt S7 werden die entstandenen fertigen Strom-Komponentengrößen sodann in Armgrößen, also Armströme, zurücktransformiert und einer unterlagerten Steuerlogik zugeführt, die den Multilevelumrichter 4 entsprechend ansteuert. Entsprechende Vorgehensweisen sind Fachleuten bekannt und brauchen hier nicht näher dargelegt werden.

Fig. 6 zeigt schließlich schematisch einen möglichen funktionalen Aufbau der Steuereinrichtung 15. Diese umfasst zunächst ein Speichermittel 20, in dem die Transformation und die Sollwerte bereitgestellt werden können, genau wie die Ermittlungszusammenhänge für die Regelgrößen der Energieregler. Auch eine Vorgabe für die Common-Mode-Spannung kann dort abgelegt sein.

Die folgenden Einheiten sind dabei vorliegend der Einfachheit halber nur für einen Teilumrichter 26, 27 gezeigt.

Eine Erfassungseinheit 21 kann aktuelle Zustandsgrößen gemäß Schritt S3 ermitteln und eine Ermittlungseinheit 22 kann die aktuellen Energie-Komponentengrößen, soweit nötig Regelabweichungen und Steuer-Armgrößen daraus errechnen (Schritt S4). Zweckmäßigerweise werden diese Informationen an die durch Regeleinheiten umgesetzten Energieregler 23 weitergegeben, die die Regelgrößen gemäß Schritt S5 ermitteln. Eine Armleistungsminimierereinheit 24 stellt weitere einzustellende Kreisströme gemäß Schritt S6 bereit. Die Steuereinheit 25 setzt die ermittelten Ausgangsgrößen dann gemäß Schritt S7 um.

Die Steuereinrichtung 15 kann selbstverständlich auch weitere Funktionseinheiten umfassen und beispielsweise auch den bereits erwähnten Ofenregler und dergleichen weitere Funktionalitäten bereitstellen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Elektroden
- 2: Lichtbogenofen
- 3: Ofentransformator
- 4: Multilevelumrichter
- 5: Versorgungsnetz
- 6: eingangsseitige Phasen
- 7: Gleichrichter
- 8: Wechselrichter
- 9: Arme
- 10: Submodule
- 11: Drosseln
- 12: ausgangsseitige Phasen
- 13: Speicherkondensatoren
- 14: Halbleiterschalter
- 15: Steuereinrichtung
- 16: Computerprogramm
- 17: Maschinencode
- 18, 19: Messmittel
- 20: Speichermittel
- 21: Erfassungseinheit
- 22: Ermittlungseinheit
- 23: Energieregler
- 24: Armleistungsminimierereinheit
- 25: Steuereinheit
- 26: Teilumrichter
- 27: Teilumrichter
- S1-S7: Schritte
- fN: Netzfrequenz
- TZ: Zykluszeit

## Patentansprüche

1. Verfahren zur Armenergieregelung eines Multilevelumrichters (4), der wenigstens einen Teilumrichter (26, 27) mit einer Mehrzahl von Umrichterarmen (9) aufweist, die Gleichspannungsanschlüsse des Teilumrichters (26, 27) mit mehreren, insbesondere drei, jeweils einer Phase zugeordneten Wechselspannungsanschlüssen des Teilumrichters (26, 27) verbinden und jeweils mehrere Submodule (10) mit einem Kondensator (13) und ansteuerbaren Schaltern (14) aufweisen, wobei eine orthogonale, insbesondere orthonormale, Transformation derart bereitgestellt wird, dass bei Anwendung auf einen Satz von Armspannungen und/oder einen Satz von Armströmen als Armgrößen folgende Arten von Komponentengrößen erhalten werden:
- eine Gleichstromkomponente, die auf Gleichstromanteile und/oder Gleichspannungsanteile in dem Teilumrichter (26, 27) bezogen ist,
- wenigstens eine Wechselstromkomponente, die auf Wechselstromanteile und/oder Wechselspannungsanteile in dem Teilumrichter (26, 27) bezogen ist,
- eine Common-Mode-Komponente, die auf gemeinsame Ströme und/oder Spannungen in den Armen (10) bezogen ist, und
- wenigstens eine Kreisstromkomponente, die auf nach außen nicht sichtbare Kreisströme und/oder deren Spannungen innerhalb des Teilumrichters (26, 27) bezogen ist,
**dadurch gekennzeichnet, dass** für Energie-Komponentengrößen, die durch Anwendung der Transformation auf eine die Energie in den jeweiligen Armen (10) beschreibende Energie-Armgröße erhalten werden, jeweils wenigstens ein Sollwert und/oder ein zulässiges Sollintervall für jede Energie-Komponentengröße bereitgestellt werden,
wobei das Verfahren folgende, nach einer Zykluszeit (TZ) jeweils wiederholte Schritte für wenigstens einen des wenigstens einen Teilumrichters (26, 27) aufweist:
- Erfassen von aktuellen Zustandsgrößen des Teilumrichters (26, 27) und Ermitteln der aktuellen Werte der Energie-Komponentengrößen aus den Zustandsgrößen,
- unabhängige Regelung der Energie-Komponentengrößen auf den zugeordneten Sollwert und/oder das zugeordnete Sollwertintervall zur Ermittlung von Regelgrößen, wobei für jede Komponentengröße wenigstens ein Energieregler (23) vorgesehen ist und wenigstens eine Regelgröße wenigstens eines Energiereglers (23) einzustellende Kreisströme beschreibt, und
- Ansteuerung des Teilumrichters (26, 27) zur Einstellung der Regelgrößen.

2. Verfahren nach Anspruch 1, **dadurch gekennzeichnet, dass** zumindest für die Energieregler (23) der Energie-Gleichstromkomponente und der Energie-Wechselstromkomponente die Regelabweichung über Kreisströme korrigiert wird und/oder für den Energieregler (23) der Energie-Common-Mode-Komponente die wenigstens eine Regelgröße einen Kreisstrom und/oder eine Strom-Komponentengröße gewählt aus der Gruppe der Strom-Gleichstromkomponente und wenigstens einer Strom-Wechselstromkomponente betrifft und/oder für den Energieregler (23) der Gleichstromkomponente die wenigstens eine Regelgröße eine Strom-Komponentengröße gewählt aus der Gruppe der Strom-Gleichstromkomponente und wenigstens einer Strom-Wechselstromkomponente betrifft.

3. Verfahren nach Anspruch 1 oder 2, **dadurch gekennzeichnet, dass** alle Sollwerte außer dem für die Energie-Gleichstromgröße als Null gewählt werden, wobei der Sollwert der Energie-Gleichstromgröße so gewählt wird, dass sich die korrekte anliegende Gleichspannung an den Gleichspannungsanschlüssen ergibt.

4. Verfahren nach einem der vorangehenden Ansprüche, **dadurch gekennzeichnet, dass** die Energie-Armgröße eine maximal schaltbare Armspannung ist.

5. Verfahren nach Anspruch 4, **dadurch gekennzeichnet, dass** zur Ermittlung der sich durch eine Regelabweichung von einem jeweiligen Sollwert ergebenden Regelgrößen für zumindest die Kreisströme ausgebenden Energieregler (23) die Regelabweichung mit einer Gesamtsteuergröße multipliziert wird, die sich als gemäß der Transformation gewichtete Summe von Steuer-Armgrößen, deren Arme (10) durch die entsprechende Regelgröße beeinflussbar sind, ergibt.

6. Verfahren nach Anspruch 5, **dadurch gekennzeichnet, dass** in die Ermittlung der Regelgröße auch ein Verstärkungsfaktor eingeht und/oder dass als die Steuer-Armgröße eine relative Armspannung, die sich bei Division der Armspannung durch die maximal mögliche Armspannung bei auf Nominalwert geladenen Kondensatoren (13) ergibt, verwendet wird.

7. Verfahren nach einem der vorangehenden Ansprüche, **dadurch gekennzeichnet, dass** bei einem zwei Teilumrichter (26, 27) aufweisenden Multilevelumrichter (4), wobei die Wechselstromanschlüsse eines netzseitigen Teilumrichters (26) mit einem Versorgungsnetz (2) und die Wechselstromanschlüsse eines lastseitigen Teilumrichters (27) mit einer Last verbunden sind, die Energieregler (23) für die Energie-Gleichstromkomponente zu einem gemeinsamen Gleichstromkomponentenregler zusammengefasst sind.

8. Verfahren nach einem der vorangehenden Ansprüche, **dadurch gekennzeichnet, dass** in einer Armleistungsminimierungsfunktion zur Minimierung der in einer Zykluszeit den Armen (10) zugeführten Leistungen wenigstens eine einen weiteren einzustellenden Kreisstrom beschreibende Minimierungsgröße ermittelt wird, die zu den den einzustellenden Kreisstrom beschreibenden Regelgrößen addiert wird.

9. Steuereinrichtung (15) für einen Multilevelumrichter (4), der wenigstens einen Teilumrichter (26, 27) mit einer Mehrzahl von Umrichterarmen (10) aufweist, die Gleichspannungsanschlüsse des Teilumrichters (26, 27) mit mehreren, insbesondere drei, jeweils einer Phase zugeordneten Wechselspannungsanschlüssen des Teilumrichters (26, 27) verbinden und jeweils mehrere Submodule (10) mit einem Kondensator (13) und ansteuerbaren Schaltern (14) aufweisen, wobei die Steuereinrichtung (15) eingerichtet ist, zur Armenergieregelung ein Verfahren nach einem der vorangehenden Ansprüche durchzuführen.

10. Computerprogramm (16), welches, wenn es auf einer Steuereinrichtung (15) für einen Multilevelumrichter (4) ausgeführt wird, diese veranlasst, ein Verfahren nach einem der Ansprüche 1 bis 8 durchzuführen.

11. Elektronisch lesbarer Datenträger, auf dem ein Computerprogramm (16) nach Anspruch 10 gespeichert ist.

12. Multilevelumrichter (4), der wenigstens einen Teilumrichter (26, 27) mit einer Mehrzahl von Umrichterarmen (10) aufweist, die Gleichspannungsanschlüsse des Teilumrichters (26, 27) mit mehreren, insbesondere drei, jeweils einer Phase zugeordneten Wechselspannungsanschlüssen des Teilumrichters (26, 27) verbinden und jeweils mehrere Submodule (10) mit einem Kondensator (13) und ansteuerbaren Schaltern (14) aufweisen, wobei der Multilevelumrichter (4) eine Steuereinrichtung (15) nach Anspruch 9 aufweist, die dessen Betrieb steuert.
